# EUROPEAN PATENT SPECIFICATION

(11) **EP 4 206 461 B1**
(45) Date of publication and mention of the grant of the patent: **17.06.2026**
(21) Application number: 21383237.1
(22) Date of filing: 30.12.2021
(51) Int. Cl.: F03D 13/10, E04H 12/34, F03D 13/20, F03D 13/40

(54) **SUPPORT ELEMENT FOR A SEGMENT OF WIND TURBINE TOWERS, SUPPORT SYSTEM COMPRISING AT LEAST A SUPPORT ELEMENT AND METHOD OF SUPPORTING AT LEAST A SEGMENT OF WIND TURBINE TOWERS**
TRÄGERELEMENT FÜR EIN SEGMENT VON WINDTURBINENTÜRMEN, TRÄGERSYSTEM MIT MINDESTENS EINEM TRÄGERELEMENT UND VERFAHREN ZUM TRAGEN MINDESTENS EINES SEGMENTS VON WINDTURBINENTÜRMEN
ÉLÉMENT DE SUPPORT POUR UN SEGMENT DE TOURS D'ÉOLIENNE, SYSTÈME DE SUPPORT COMPRENANT AU MOINS UN ÉLÉMENT DE SUPPORT ET PROCÉDÉ DE SUPPORT D'AU MOINS UN SEGMENT DE TOURS D'ÉOLIENNE

(43) Date of publication of application: 05.07.2023
(73) Proprietor: Nordex Energy Spain, S.A.U., 31395 Barasoain (Navarra) (ES)
(72) Inventor: Cerrillo Gómez, Vanessa, BARASOAIN (NAVARRA) (ES); Arraztoa Magaña, Unai, BARASOAIN (NAVARRA) (ES)
(74) Representative: Pons IP

(56) References cited:
- EP-A1- 3 064 451
- EP-A2- 1 989 438
- ES-A1- 2 688 842
- US-A1- 2017 152 833

## Description

### OBJECT OF THE INVENTION

The present invention relates to a support element for a segment of wind turbine towers which avoids damage of the segment while the segment is supported or stacked.

The object of the present invention is also a support system comprising at least a support element which provides a competitive advantage that allows to reduce the space necessary for storing the segments or to allow more segments to be stored in the same space without interferences between the segments, by maximizing the number of segments that can be stored under a maximum predetermined height.

Another object of the present invention is a method of supporting at least a segment of wind turbine towers.

### BACKGROUND OF THE INVENTION

The towers that support wind turbines in wind farms, both on-shore and off-shore, are made up of several segments that are joined together at their ends to reach the required nacelle height. In turn, the tower is formed by the lateral assembly of several pieces, commonly known as "voussoirs" or segments, giving rise to a tower of truncated cone or cylindrical geometry.

The materials used for the construction of voussoirs or segments can be very diverse, although most commonly they are made of steel or concrete. The variability existing on the market in terms of geometries and weights of these elements depends on the manufacturer, so there are many different types.

The known support systems for the stockpiling and transport of segments are based on the support of the segment by its central generatrix on a horizontal surface and on the wedging of the segment on both sides of the central generatrix to prevent its displacement.

In concrete tower factories, segments are stacked with blocks that allow to stack more than two segments.

The disadvantage of these systems is that it is necessary to gradually place wedges on both sides of the central generatrix until the segment is centred and balanced.

In addition, these systems are very unstable, as the slightest movement can cause one of the wedges to move and consequently the segment to shift, potentially damaging the segments.

Other known support elements are described in documents EP1989438A2, ES2688842A1, US2017/152833A1 and EP3064451A1.

The support element for a segment of wind turbine towers of the present invention can be used for the stockpiling of segments in the factory and solves the above-mentioned disadvantages.

### DESCRIPTION OF THE INVENTION

The present invention relates to a support element for a segment of wind turbine towers which prevents any damage to the segment while the segment is supported or stacked.

The support element comprises:
- a main body which in turn comprises an upper surface, wherein the upper surface of the main body comprises a central zone and two lateral zones;
- at least two first protective elements, each one configured to be attached to one lateral zone of the lateral zones of the upper surface of the main body; and
wherein the at least two first protective elements are configured, in use, to support at least one first segment having a first geometry.

In this way, at least one protective element is attached to each of the two lateral zones of the upper surface, so that the at least one first segment having a first geometry rests on them.

Preferably, the main body is made of concrete. In this way, the main body has a high resistance to compression. Also preferably, the segment of a wind turbine is a concrete segment. In this way, the support elements and the segments can be manufactured in the same concrete factory, thus providing advantages in terms of cost and convenience.

Optionally, the upper surface is a concave surface.

Optionally, the central zone is a horizontal surface. Optionally, the two lateral zones are two inclined surfaces. Preferably, the two lateral zones are symmetrically disposed with regard to a central longitudinal axis of the support element, the central longitudinal axis being parallel to the upper surface. More preferably, the two lateral zones are adjacent to the central zone.

According to the invention, the main body of the support element further comprises a lower surface. Furthermore according to the invention, the lower surface comprises at least a central zone and two lateral zones. The lower surface is configured to provide a base for the support element.

The distance between the central zone of the upper surface and the central zone of the lower surface can be defined as a central thickness.

The distance between each one of the two lateral zones of the upper surface and each one of the opposed two lateral zones of the lower surface can be defined as a lateral thickness.

Preferably, the central thickness is smaller than the lateral thickness. This has the advantageous effect of reducing the amount of concrete to be used in the support element while at the same time achieving the effect of stacking the segments using the minimum height without interferences between them.

In a non-claimed example, the lower surface of the main body of the support element is configured to be disposed, in use, on the ground. Preferably, the lower surface of the main body of the support element is configured to be disposed, in use, on a foundation. Preferably the lower surface comprises a planar surface.

According to the invention, the main body of the support element further comprises a lower surface, wherein the lower surface comprises at least a central zone and two lateral zones, and the support element further comprises at least two second protective elements, each one configured to be attached to one lateral zone of the two lateral zones of the lower surface of the main body, and wherein the at least two second protective elements are configured, in use, to be disposed on the at least one first segment having the first geometry

Preferably, in the second embodiment the lower surface is a convex surface. Also preferably, the central zone of the lower surface is a horizontal surface and the two lateral zones of the lower surface are two inclined surfaces. Preferably, the two lateral surfaces are symmetrically disposed with regard to a central longitudinal axis of the support element. More preferably, the two lateral zones are adjacent to the central zone.

Optionally, the central zone of the upper surface is parallel to the central zone of the lower surface and the two lateral zones of the upper surface are respectively parallel to the two lateral zones of the lower surface.

Optionally, the at least two second protective elements are at least partially disposed in a vertical projection of the at least two first protective elements in such a way that the reaction forces transmitted to the segment by the at least two second protective elements and by the at least two first protective elements in both sides of the segment are aligned such that substantially no shear stresses are created within the segment.

Optionally, the at least one first protective element is configured to be attached to the upper surface of the main body in a detachable manner.

Optionally, the at least one second protective element is configured to be attached to the lower surface of the main body in a detachable manner.

Preferably, the at least two first protective elements are disposed in a symmetrical position with regard to the central longitudinal axis of the support element.

Preferably, the at least two second protective elements are disposed in a symmetrical position with regard to the central longitudinal axis of the support element.

Preferably, each one of the at least two first protective elements are disposed in one lateral zone of the two lateral zones of the upper surface of the main body.

Optionally, the first protective elements and/or the second protective elements comprises an elastomer. The elastomer is selected from polychloroprene, ethylene propylene diene monomer (EPDM), polyisoprene , polybutadiene, styrene-butadiene rubber, butyl rubber, nitrile rubber , Ethylenepropylene rubber (EPM), Ethylene Rubber-Vinyl Acetate (EVM), Fluorinated rubber (FKM), Acrylic rubber (ACM), Chlorinated polyethylene (CM), Chlorosulfur polyethylene (CSM), polyamide and polyester copolymer, Epichlorohydrin rubber (ECO), Silicone rubber (MQ), Polyurethane elastomers (AU and EU), Polysulfide rubber or a combination of them. The presence of an elastomer in the supporting surface of the protective element results in the capacity of reducing damages in the surface of the segment, and, in the case of curved segments, of adapting to the curvature of the surface of the tower segment.

Preferably, the first protective element or elements and/or the second protective element or elements comprises a thermoplastic elastomer. Preferably, the elastomer is a reinforced elastomer. In a first embodiment, the reinforced elastomer comprises steel sheets bonded to the elastomer, by example in a vulcanisation process. In a second embodiment, the reinforced elastomer comprises steel particles embedded in the elastomer, by example in a vulcanisation process. Due to this, the protective element has a high resistance to compression and shear stresses.

More preferably, the first and second protective elements comprise an elastomer which optionally comprises steel sheets bonded to the elastomer. More preferably, the elastomer is polychloroprene reinforced with embedded steel sheets. The difference between the summatory of the lateral thickness and the thickness of the first and/or second protective elements with respect to the central thickness allows to stack the tower segments in the minimum possible height without damage or interferences between them.

The summatory of the thickness of the lateral thickness and the thickness of the first and/or second protective elements may optionally be between 0.05*R and 1*R, more preferably between 0.1*R and 0.8*R and even more preferably between 0.15*R and 0.7*R, wherein R is the radius of the tower segment in a segmented tower of a circular cross-section wherein the segments are curved segments, supported, in use, by the support elements described above.

The invention also relates to a support system comprising:
- one support element according to the first embodiment;
- at least one support element according to the second embodiment;
- one first segment of wind turbine towers, wherein the one first segment is supported by means of the at least two first protective elements of the one support element according to the first embodiment,
- wherein the at least two second protective elements of the at least one support element according to the second embodiment are disposed on the at least one first segment having the first geometry; and
- at least one additional first segment of wind turbine towers, wherein the at least one additional first segment is supported by means of the at least two first protective element of the at least one support element according to the second embodiment.

In this way, the support system avoids damage of the one first segment while the segment is supported or stacked.

Optionally, the one first segment and the at least one additional first segment is curved or planar.

Optionally, the support system further comprises a foundation configured to support the one support element according to the first embodiment, the at least one support element according to the second embodiment and the at least one first segment and the at least one additional first segment having the first geometry.

Preferably, the at least two second protective elements of the at least one support element as the one described for the second embodiment is also configured to be disposed on the one first segment having the first geometry.

So configured, the support system allows to stack more than two segments of wind turbines avoiding the damage of the segments, reducing the space required for storing or stacking segments or to allow more segments to be stored or stacked in the same floor area.

Preferably, the at least two support elements are disposed in a symmetrical position with regard to a central section of the at least one first segment defined in a plane perpendicular to a longitudinal direction of the at least one first segment.

Optionally, the support system comprises:
- two support elements as the ones described for the first embodiment;
- at least two support elements as the ones described for the second embodiment;
- wherein the at least one first segment is supported by means of the at least two first protective elements of each of the two support elements according to the first embodiment; and
- wherein the at least one additional first segment is supported by means of the at least two first protective elements of the at least two support elements according to the second embodiment.

So configured, the support system provides a competitive advantage that allows to reduce the necessary area for storing the segments or to allow more segments to be stored in the same area.

Preferably, the two support elements as the ones described for the first embodiment and/or the at least two support elements as the ones described for the second embodiment are disposed in a symmetrical position with regard to a central section of the one first segment and/or the at least one additional first segment defined in a plane perpendicular to a longitudinal direction of the one first segment and the at least one additional first segment.

Preferably, the central thickness is smaller than the lateral thickness.

In a segmented tower of a circular cross-section the segments are curved segments. In such a case, in the support system of the present invention described above, the at least one first segment and the at least one additional first segment are curved, wherein the difference between the summatory of the lateral thickness and the thickness of the first and/or second protective elements with respect to the central thickness for the two support elements as the one described for the first embodiment and for the at least two support elements as the ones described for the second embodiment allows to stack the tower segments in the minimum possible height without damage or interferences between the curved segments or between the support elements and the lowest most part of the curved segments. The summatory of the lateral thickness and the thickness of the first and/or second protective elements may optionally be between 0.05*R and 1*R, more preferably between 0.1*R and 0.8*R and even more preferably between 0.15*R and 0.7*R, wherein R is the radius of the tower segment in order to optimize the total occupied volume and avoid the abovementioned interferences.

The invention also relates to a method of supporting at least a segment of wind turbine towers carried out with the support system described above, wherein the method comprises the steps of:
- attaching each one of the at least two first protective elements to one lateral zone of the upper surface of the main body of the one or two support elements according to the first embodiment;
- disposing the one first segment on the at least two first protective elements of the one or two support elements according to the first embodiment;
- attaching each one of the at least two second protective elements to one lateral zone of the lower surface of the main body of the at least one or at least two support elements according to the second embodiment;
- disposing the at least one or at least two support elements according to the second embodiment on the one first segment;
- attaching each one of the at least two first protective elements to one lateral zone of the upper surface of the main body of the at least one or at least two support elements according to the second embodiment; and
- disposing the at least one additional first segment on the at least two first protective elements of the at least one or at least two support elements according to the second embodiment.

Optionally, the method further comprises a step of:
- casting a foundation in a stockpiling area;
- disposing the one or two support elements according to the first embodiment on the foundation;
wherein the step of disposing the one or two first segments on the at least two first protective elements of the one or two support elements according to the first embodiment is carried out after the step of disposing the one or two support elements according to the first embodiment on the foundation. Optionally, the method comprises the following steps:
- calculating the dimensions of the support elements according to the first and second embodiment and the dimensions of the protective elements in respect of the dimensions of the tower segments to be stockpiled.
- manufacturing the support elements with said dimensions.

### BRIEF DESCRIPTION OF THE DRAWINGS

Figure 1 shows the support element of the invention according to the first preferred embodiment wherein the first protective elements comprise an ethylene propylene diene monomer elastomer, showing in a detail A the first protective element.
Figure 2 shows the support element of the invention according to the second preferred embodiment wherein the first protective elements and the second protective elements comprise an ethylene propylene diene monomer elastomer.
Figures 3 and 4 show the steps of the method of supporting at least a segment of wind turbine towers carried out with the support system of the present invention.
Figures 5 and 6 show additional steps of the method of supporting at least a segment of wind turbine towers carried out with the support system comprising one support element according to the first preferred embodiment as shown in Figure 1 and one support element according to the second preferred embodiment as shown in Figure 2, for stacking two segments of wind turbine towers.
Figure 7 shows the support system of the present invention comprising one support element according to the first preferred embodiment as shown in Figure 1 and three support elements according to the second preferred embodiment as shown in Figure 2, for stacking four segments of wind turbine towers.
Figure 8 shows a section AA of Figure 7.
Figure 9 shows a plan view of Figure 1 or Figure 2.
Figure 10 shows the support element of the invention according to the first preferred embodiment wherein the first protective elements comprise a polychloroprene elastomer.
Figure 11 shows the support element of the invention according to the second preferred embodiment wherein the first protective elements and the second protective elements comprise a polychloroprene elastomer, showing in a detail B the first protective element.
Figure 12 shows the support system of the present invention comprising one support element according to the first preferred embodiment as shown in Figure 10 and four support elements according to the second preferred embodiment as shown in Figure 11, the system being configured to support at least four segments, preferably at least five segments below a maximum predetermined height defined by a hoisting system or crane.

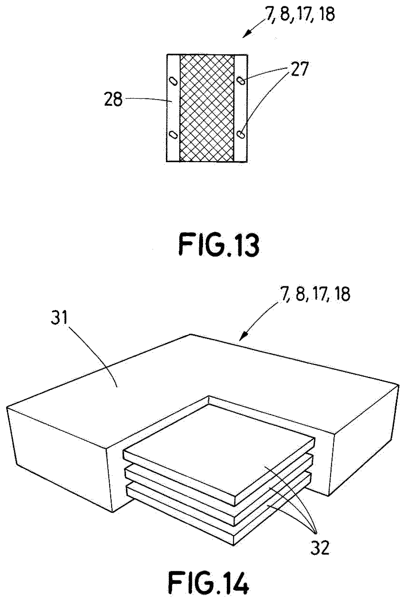

Figure 13 shows a plan view of the protective element shown in the detail B of Figure 11.
Figure 14 shows a view in perspective of the reinforced elastomer of the protective element shown in detail B, wherein a part of the elastomer has been removed to show the steel sheets bonded to the elastomer.

### PREFERRED EMBODIMENT OF THE INVENTION

The invention is described in detail as follows. It relates to a support element (1, 2) for a segment (11, 12) of wind turbine towers, wherein the support element comprises:
- a main body (3, 4) which in turn comprises an upper surface (5, 6), wherein the upper surface (5, 6) of the main body (3, 4) comprises a central zone (9, 10) and two lateral zones (13, 14);
- at least two first protective elements (7, 8), each one configured to be attached to one lateral zone (13, 14) of the two lateral zones (13, 14) of the upper surface (5, 6) of the main body (3, 4); and
wherein the at least two first protective elements (7, 8) are configured, in use, to support at least one first segment (11, 12) having a first geometry.

Preferably, the main body (1, 2) is made of concrete, and more preferably of reinforced concrete. It can hence be manufactured in the same manufacturing facility as the concrete segments.

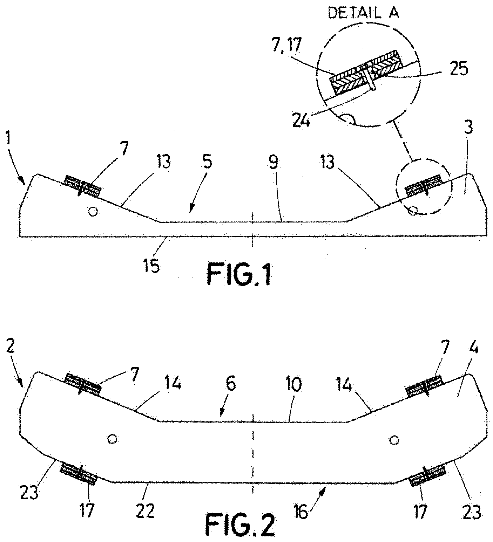

As shown in Figures 1, 2, 10 and 11 for the first and second preferred embodiments of support element (1, 2), the central zone (9, 10) is a horizontal surface and the two lateral zones (13, 14) are two inclined surfaces, and wherein the two lateral zones (13, 14) are symmetrically disposed with regard to a central longitudinal axis (20) of the support element (1, 2), the central longitudinal axis (20) being parallel to the central zone (9) of the upper surface (5, 6). More preferably, the two lateral zones (13, 14) are adjacent to the central zone (9, 10). Even more preferably, a central thickness (t1) between opposing central zones (9, 10) is smaller than a lateral thickness (t2) between opposing lateral zones (13, 14), and the upper surface (5, 6) of the support element (1, 2) is preferably a concave surface.

Additionally, the main body (3, 4) of the support element (1, 2) further comprises a lower surface (15, 16).

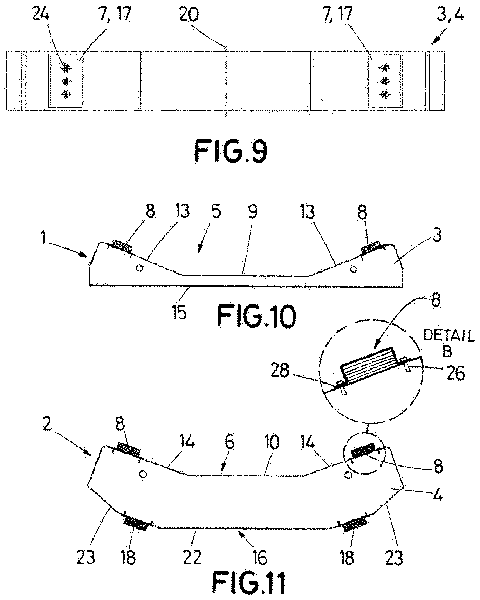

In the first embodiment shown in Figures 1 and 10, the lower surface (15) of the main body (3) of the support element (1) is configured to be disposed, in use, on a foundation (21), wherein the lower surface (15) comprises a planar surface.

In the second embodiment shown in Figures 2 and 11, the main body (3) of the support element (2) further comprises a lower surface (16), wherein the lower surface (16) comprises at least a central zone (22) and two lateral zones (23), and
the support element (2) further comprises:
- at least two second protective elements (17, 18), each one configured to be attached to one lateral zone (23) of the two lateral zones (23) of the lower surface (16) of the main body (4), and
wherein the at least two second protective elements (17, 18) are configured, in use, to be disposed on the at least one first segment (11, 12) having the first geometry.

Preferably, the central zone (22) of the lower surface (16) is a horizontal surface and the two lateral zones (23) of the lower surface (16) are two inclined surfaces, wherein the two lateral zones (23) are symmetrically disposed with regard to a central longitudinal axis (20) of the support element (2). More preferably, the two lateral zones (23) of the lower surface (16) are adjacent to the central zone (22). Preferably, the central zone (10) of the upper surface (6) is parallel to the central zone (22) of the lower surface (16) and the two lateral zones (14) of the upper surface (6) are respectively parallel to the two lateral zones (23) of the lower surface (16). Even more preferably, the central thickness (t1) between opposing central zones (10, 22) is smaller than the lateral thickness (t2) between opposing lateral zones (14, 23), and the lower surface (16) is preferably a convex surface.

For the embodiments shown in Figures 2 and 11, the at least two second protective elements (17, 18) are at least partially disposed in a vertical projection of the at least two first protective elements (7, 8). Preferably, the at least two first protective elements (7, 8) and the at least two second protective elements (17, 18) comprise a central vertical axis (40), wherein the central vertical axis (40) is common for the at least two first protective elements (7, 8) and the at least two second protective elements (17, 18) for each of the protective elements (7, 8) disposed at each side of the central longitudinal axis (20) of the support element (2).

In the embodiments shown in Figures 1, 2, 10 and 11, the support element (1, 2) comprises at least two first protective elements (7, 8) disposed in a symmetrical position with regard to the central longitudinal axis (20) of the support element (1, 2) that are configured to be attached to the upper surface (5, 6) of the main body (3, 4), wherein the at least two first protective elements (7, 8) are configured, in use, to support the at least one first segment (11, 12) of wind turbine towers. Also, for the embodiments shown in Figures 2 and 11, the support element (2) comprises at least two second protective elements (17, 18) disposed in a symmetrical position with regard to the central longitudinal axis (20) of the support element (2) that are configured to be attached to the lower surface (16) of the main body (4), wherein the at least two second protective elements (17, 18) are also configured to be disposed, in use, on a second segment (11) of wind turbine towers.

For the embodiments shown in Figures 1 and 10, the distance between each one of the two lateral zones (14) of the upper surface (6) and the two lateral zones (23) of the lower surface (16) is greater than the distance between the central zone (10) of the upper surface (6) and the central zone (22) of the lower surface (16). This has the advantageous effect of reducing the amount of concrete to be used while at the same time achieving the effect of stacking the segments without interferences between them.

Optionally, the lateral thickness (t2) is between 5 and 1 times the central thickness (t1).

Optionally, the lateral thickness (t2) is between 3,5 and 1 times the central thickness (t1).

Optionally, the lateral thickness (t2) is between 2,5 and 1 times the central thickness (t1).

For the embodiments shown in Figures 2 and 11, the distance between each one of the two lateral zones (14) of the upper surface (6) and each one of the opposed two lateral zones (23) of the lower surface (16) is greater than the distance between the central zone (10) of the upper surface (6) and the central zone (22) of the lower surface (16). This has the advantageous effect of reducing the amount of concrete to be used while at the same time achieving the effect of stacking the segments without interferences between them.

Preferably, the ratio between the lateral thickness (t2) and the thickness (t3) of the first protective elements (7, 8) and/or the ratio between the lateral thickness (t2) and the thickness (t3) of the second protective elements (17, 18) is greater than 3.

Preferably, the thickness (t3) of the first protective elements (7, 8) and the thickness (t3) of the second protective elements (17, 18) is the same in support elements (2) configured to support segments (12) having the same geometry.

Preferably, the ratio between the lateral thickness (t2) of a support element (2) and the thickness of the segments (12) that the support element (2) is configured to support is greater than 2.

Optionally, the lateral thickness (t2) is between 1,5 and 1 times the central thickness (t1).

Optionally, the lateral thickness (t2) is between 1,3 and 1,1 times the central thickness (t1).

Optionally, the lateral thickness (t2) is between 1,25 and 1,2 times the central thickness (t1).

For the embodiments shown in Figures 1, 2, 10 and 11, the two lateral zones (13, 14) of the upper surface (5, 6) and the central zone (9, 10) of the upper surface (5, 6) are planar.

For the embodiments shown in Figures 2 and 11, the two lateral zones (23) of the lower surface (16) and the central zone (22) of the lower surface (16) are planar.

For the embodiments shown in Figures 1, 2, 10 and 11, the first protective elements (7, 8) and the second protective elements (17, 18) comprise an elastomer. In the first embodiment shown in Figures 1 and 2, the first protective elements (7) and the second protective elements (17) comprise ethylene propylene diene monomer as elastomer (31) and steel sheets embedded into the elastomer. The first protective elements (7) and the second protective elements (17) are attached to the main body (3, 4) by means of screws (24) passing through central holes (25) disposed in the first protective elements (7) and the second protective elements (17). In the second embodiment shown in Figures 10 and 11, the first protective elements (8) and the second protective elements (18) comprises polychloroprene as elastomer and steel sheets (32) bonded to the elastomer, by example in a vulcanisation process. The first protective elements (8) and the second protective elements (18) are attached to the main body (3, 4) by means of screws (26) passing through lateral holes (27) disposed in a lower steel plate (28) of the first protective elements (8) and the second protective elements (18).

The invention also relates to a support system comprising:
- one support element (1) according to the first embodiment;
- at least one support element (2) according to the second embodiment;
- one first segment (11) of wind turbine towers, wherein the one first segment (11) is supported by means of the at least two first protective elements (7, 8) of the one support element (1) according to the first embodiment,
- wherein the at least two second protective elements (17, 18) of the at least one support element (2) according to the second embodiment are disposed on the one first segment (11) having the first geometry; and
- at least one additional first segment (12) of wind turbine towers, wherein the at least one additional first segment (12) is supported by means of the at least two first protective elements (7, 8) of the at least one support element (2) according to the second embodiment.

Preferably, the support system further comprises a foundation (21) configured to support the one support element (1) according to the first embodiment, the at least one support element (2) according to the second embodiment, and the one first segment (11, 12) and the at least one additional first segment (12) having the first geometry.

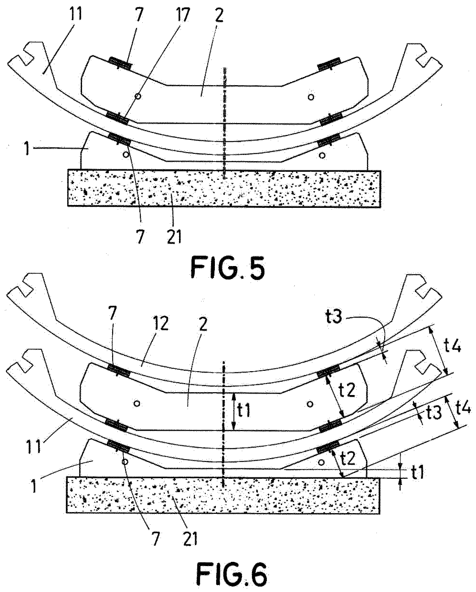

Figures 6 shows a support system comprising one support element (1) according to the first preferred embodiment as shown in Figure 1 and one support element (2) according to the second preferred embodiment as shown in Figure 2, for stacking two segments (11, 12) of wind turbine towers, with the system described above.

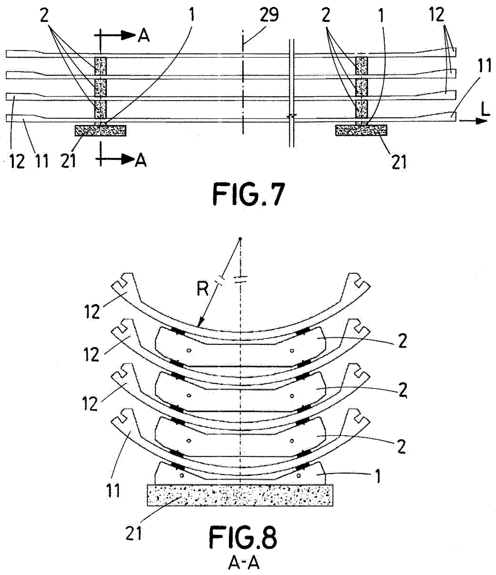

Preferably, the support system comprises:
- two support elements (1) according to the first embodiment;
- at least two support elements (2) according to the second embodiment,
- wherein the one first segment (11) is supported by means of the at least two first protective elements (7, 8) of each of the two support elements (1) according to the first embodiment; and
- wherein the at least two second protective elements (17, 18) of the at least two support elements (2) according to the second embodiment are disposed on the one first segment (11) having the first geometry; and
- wherein the at least one additional first segment (12) is supported by means of the at least two first protective elements (7, 8) of the at least two support elements (2) according to the second embodiment.
wherein the two support elements (1) according to the first embodiment and the at least two support elements (2) according to the second embodiment are disposed in a symmetrical position with regard to a central section (29) of the one first segment (11) and the at least one additional first segment (12) defined in a plane perpendicular to a longitudinal direction (L) of the one first segment (11) and the at least one additional first segment (12), as shown in Figure 7.

Preferably, the two support elements (1) according to the first embodiment and the at least two support elements (2) according to the second embodiment are centred between the central section (29) and an end of the at least one first segment (11, 12) in the longitudinal direction (L).

Preferably, the two support elements (1) according to the first embodiment and the at least two support elements (2) according to the second embodiment are displaced towards the ends of the at least one first segment (11, 12) in the longitudinal direction (L), between the central section (29) and the ends of the at least one first segment (11, 12) in the longitudinal direction (L).

In a segmented tower of a circular cross-section the segments are curved segments with substantially curved internal and external surfaces. In such a case, in the support system of the present invention described above, the thickness ratio between the summatory (t4) of the lateral thickness (t2) and the thickness (t3) of the first and/or second protective elements (7, 8, 17, 18) with respect to the central thickness (t1) of the two support elements (1) as the one described for the first embodiment and the thickness ratio between the summatory (t4) of the lateral thickness (t2) and the thickness (t3) of the first and/or second protective elements (7, 8, 17, 18) with respect to the central thickness (t1) of the two support elements (2) as the ones described for the second embodiment allow to stack the tower segments in the minimum possible height without damage or interferences between the curved segments or between the support elements and the lowest most part of the curved segments.

The summatory (t4) of the lateral thickness (t2) and the thickness (t3) of the first and/or second protective elements may optionally be between 0.05*R and 1*R, more preferably between 0.1*R and 0.8*R and even more preferably between 0.15*R and 0.7*R, wherein R is the radius of the tower segment in order to optimize the total occupied volume and avoid the abovementioned interferences.

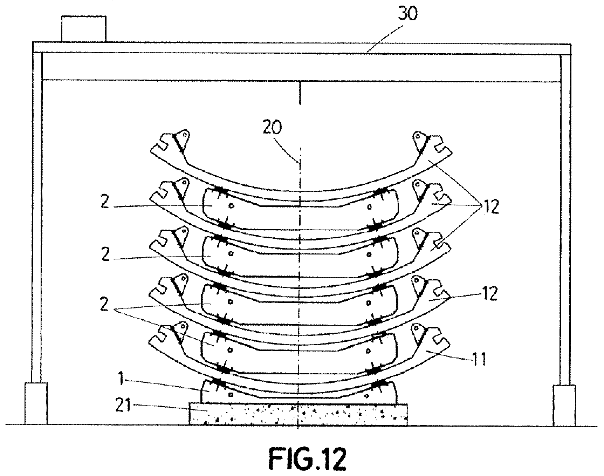

In particular, the support system described above is configured to support at least 4 segments, preferably at least 5 segments below a maximum predetermined height defined by a hoisting system or crane (30), as shown in Figure 12.

In particular, the support system comprises support elements (1, 2) configured to support different types of segments of a wind turbine tower having as many geometries as needed.

In an embodiment, a 100-140m high concrete tower of a wind turbine might have five to seven different types of segments respectively having five to seven different geometries (in particular, five to seven different radius of curvature). **The** support system comprises in this case five to seven different types of support elements configured to stack the different types of segments in different piles.

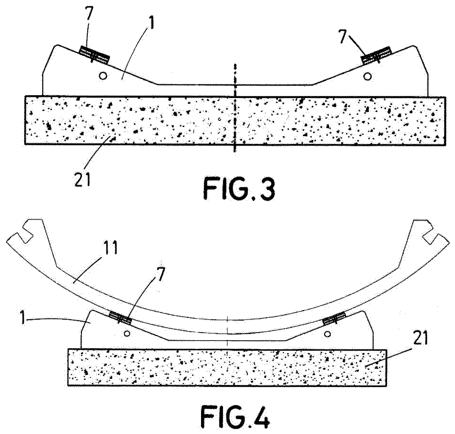

As it is shown in Figures 3 to 8, the invention also relates to a method of supporting at least a segment (11, 12) of wind turbine towers carried out with the support system described above, wherein the method comprises the steps of:
- attaching each one of the at least two first protective elements (7, 8) to one lateral zone (13) of the upper surface (5) of the main body (3) of the one or two support elements (1) according to the first embodiment;
- disposing the one first segment (11) on the at least two first protective elements (7, 8) of the one or two support elements (1) according to the first embodiment;
- attaching each one of the at least two second protective elements (17, 18) to one lateral zone (23, 24) of the lower surface (16) of the main body (4) of the at least one or at least two support elements (2) according to the second embodiment;
- disposing the at least one or at least two support elements (2) according to the second embodiment on the one first segment (1);
- attaching each one of the at least two first protective elements (7, 8) to one lateral zone (13, 14) of the upper surface (6) of the main body (4) of the at least one or at least two support elements (2) according to the second embodiment; and
- disposing the at least one additional first segment (12) on the at least two first protective elements (7, 8) of the at least one or at least two support elements (2) according to the second embodiment.

Preferably, the step of disposing the one first segment (11) on the at least two first protective elements (7, 8) of the one or two support elements (1) according to the first embodiment can be carried out before, after or simultaneously to the step of attaching each one of the at least two second protective elements (17, 18) to one lateral zone (23, 24) of the lower surface (16) of the main body (4) of the at least one or at least two support elements (2) according to the second embodiment.

Preferably, the step of disposing the at least one or at least two support elements (2) according to the second embodiment on the one first segment (1) can be carried out before, after or simultaneously to the step of attaching each one of the at least two first protective elements (7, 8) to one lateral zone (13, 14) of the upper surface (6) of the main body (4) of the at least one or at least two support elements (2) according to the second embodiment.

Preferably, the method further comprises the following steps:
- casting a foundation (21) in a stockpiling area;
- disposing the one or two support elements (1, 2) according to the first embodiment on the foundation (21);
wherein the step of disposing the one or two first segments (11) on the at least two first protective elements (7, 8) of the one or two support elements (1) according to the first embodiment is carried out after the step of disposing the one or two support elements (1) according to the first embodiment on the foundation (21).

## Claims

1. Support element (1, 2) for a segment (11, 12) of wind turbine towers, wherein the support element (1, 2) comprises:
• a main body (3, 4) which in turn comprises an upper surface (5, 6), wherein the upper surface (5, 6) of the main body (3, 4) comprises a central zone (9, 10) and two lateral zones (13, 14);
• at least two first protective elements (7, 8), each one configured to be attached to one lateral zone (13, 14) of the two lateral zones (13, 14) of the upper surface (5, 6) of the main body (3, 4); and
wherein the at least two first protective elements (7, 8) are configured, in use, to support at least one first segment (11, 12) having a first geometry;
wherein:
• the main body (3) of the support element (2) further comprises a lower surface (16), wherein the lower surface (15, 16) comprises at least a central zone (22) and two lateral zones (23), and
**characterized in that** the support element (2) further comprises:
• at least two second protective elements (17, 18), each one configured to be attached to one lateral zone (23) of the two lateral zones (23) of the lower surface (16) of the main body (4), and
wherein the at least two second protective elements (17, 18) are configured, in use, to be disposed on the at least one first segment (11, 12) having the first geometry.

2. Support element (1, 2) according to claim 1, wherein the two lateral zones (13, 14) of the upper surface (5, 6) of the main body (3, 4) are two inclined surfaces.

3. Support element (1, 2) according to any one of previous claims, wherein the lower surface (15) of the main body (3) of the support element (1) comprises at least one planar surface.

4. Support element (1, 2) according to claim 3, wherein the lower surface (15) of the main body (3) of the support element (1) is configured to be disposed, in use, on a foundation (21).

5. Support element (1, 2) according to claim 1, wherein the two lateral zones (23) of the lower surface (16) of the main body (2) are inclined surfaces.

6. Support element (1, 2) according to claim 1, wherein the at least two first protective elements (7, 8) are disposed in a symmetrical position with regard to the central longitudinal axis (20) of the support element (1, 2).

7. Support element (1, 2) according to claim 6, wherein the at least two second protective elements (17, 18) are at least partially disposed in a vertical projection of the at least two first protective elements (7, 8).

8. Support element (1, 2) according to any one of the preceding claims, wherein the distance between the central zone (10) of the upper surface (6) and the central zone (22) of the lower surface (16) defined as a central thickness (t1) is smaller than the distance between each one of the two lateral zones (14) of the upper surface (6) and each one of the opposed two lateral zones (23) of the lower surface (16) defined as a lateral thickness (t2).

9. Support element (1, 2) according to any one of previous claims, wherein the first protective element (7, 8) or elements and/or the second protective element (17, 18) or elements comprises an elastomer.

10. Support element (1, 2) according to claim 9, wherein the elastomer is a reinforced elastomer.

11. Support element (1, 2) according to claim 10, wherein the reinforced elastomer comprises steel sheets bonded to the elastomer.

12. Support system comprising:
• one support element (1) of any one of claims 1 to 11;
• at least one support element (2) of any one of claims 1 to 11;
• one first segment (11) of wind turbine towers, wherein the one first segment (11) is supported by means of the at least two first protective elements (7, 8) of the one support element (1) of any one of claims 1 to 11, and;
• wherein the at least two second protective elements (17, 18) of the at least one support element (2) of any one of claims 1 to 11 are disposed on the one first segment (11, 12) having the first geometry;
• at least one additional first segment (12) of wind turbine towers, wherein the at least one additional first segment (12) is supported by means of the at least two first protective elements (7, 8) of the at least one support element (2) of any of claims 1 to 11.

13. Support system according to claim 12, further comprising a foundation (21) configured to support the one support element (1) of any one of claims 1 to 11, the at least one support element (2) of any one of claims 1 to 11, and the one first segment (11) and the at least one additional first segment (12) having the first geometry.

14. Support system according to any one of claims 12 or 13 comprising:
• two support elements (1) of any one of claims 1 to 11;
• at least two support elements (2) of any one of claims 1 to 11,
• wherein the one first segment (11) is supported by means of the at least two first protective elements (7, 8) of each of the two support elements (1) of any one of claims 1 to 11;
• wherein the at least two second protective elements (17, 18) of the at least two support elements (2) of any one of claims 1 to 11 are disposed on the one first segment (11) having the first geometry; and
• wherein the at least one additional first segment (12) is supported by means of the at least two first protective elements (7, 8) of the at least two support elements (2) of any of claims 1 to 11.

15. Support system according to claim 14, wherein the two support elements (1) of any one of claims 1 to 11 and the at least two support elements (2) of any one of claims 1 to 11 are disposed in a symmetrical position with regard to a central section (29) of the one first segment (11) and the at least one additional first segment (12) defined in a plane perpendicular to a longitudinal direction (L) of the first segments (11, 12).

16. Support system according to any one of claims 12 to 15, wherein the system is configured to support at least four segments (11, 12), preferably at least five segments (11, 12) below a maximum predetermined height defined by a crane (30).

17. Method of supporting at least a segment (11, 12) of wind turbine towers carried out with the support system of any one of claims 12 to 16, wherein the method comprises the steps of:
• attaching each one of the at least two first protective elements (7, 8) to one lateral zone (13) of the upper surface (5) of the main body (3) of the one or two support elements (1) of any one of claims 1 to 11;
• disposing the one first segment (11) on the at least two first protective elements (7, 8) of the one or two support elements (1) of any one of claims 1 to 11;
• attaching each one of the at least two second protective elements (17, 18) to one lateral zone (23, 24) of the lower surface (16) of the main body (4) of the at least one or at least two support elements (2) of any one of claims 1 to 11;
• disposing the at least one or at least two support elements (2) of any one of claims 1 to 11 on the one first segment (1);
• attaching each one of the at least two first protective elements (7, 8) to one lateral zone (13, 14) of the upper surface (6) of the main body (4) of the at least one or at least two support elements (2) of any one of claims 1 to 11; and
• disposing the at least one additional first segment (12) on the at least two first protective elements (7, 8) of the at least one or at least two support elements (2) of any one of claims 1 to 11.

18. Method according to claim 17, further comprising the steps of:
• casting a foundation (21) in a stockpiling area;
• disposing the one or two support elements (1, 2) of any one of claims 1 to 11 on the foundation;
wherein the step of disposing the one or two first segments (11) on the at least two first protective elements (7, 8) of the one or two support elements (1) of any one of claims 1 to 11 is carried out after the step of disposing the one or two support elements (1) of any one of claims 1 to 11 on the foundation (21).

## Patentansprüche

1. Tragelement (1, 2) für ein Segment (11, 12) von Windturbinentürmen, wobei das Tragelement (1, 2) Folgendes umfasst:
• einen Hauptkörper (3, 4), der wiederum eine Oberseite (5, 6) umfasst, wobei die Oberseite (5, 6) des Hauptkörpers (3, 4) einen mittleren Bereich (9, 10) und zwei seitliche Bereiche (13, 14) umfasst;
• mindestens zwei erste Schutzelemente (7, 8), die jeweils so konfiguriert sind, dass sie an einem seitlichen Bereich (13, 14) der zwei seitlichen Bereiche (13, 14) der Oberseite (5, 6) des Hauptkörpers (3, 4) befestigt werden; und
wobei die mindestens zwei ersten Schutzelemente (7, 8) so konfiguriert sind, dass sie im Gebrauch mindestens ein erstes Segment (11, 12) mit einer ersten Geometrie abstützen;
wobei:
• der Hauptkörper (3) des Tragelements (2) ferner eine Unterseite (16) aufweist, wobei die Unterseite (15, 16) mindestens einen mittleren Bereich (22) und zwei seitliche Bereiche (23) umfasst, und
**dadurch gekennzeichnet, dass** das Tragelement (2) ferner Folgendes umfasst:
• mindestens zwei zweite Schutzelemente (17, 18), die jeweils so konfiguriert sind, dass sie an einem seitlichen Bereich (23) der zwei seitlichen Bereiche (23) der Unterseite (16) des Hauptkörpers (4) angebracht werden, und
wobei die mindestens zwei zweiten Schutzelemente (17, 18) so konfiguriert sind, dass sie im Gebrauch auf dem mindestens einen ersten Segment (11, 12) mit der ersten Geometrie angeordnet werden.

2. Tragelement (1, 2) gemäß Anspruch 1, wobei die zwei seitlichen Bereiche (13, 14) der Oberseite (5, 6) des Hauptkörpers (3, 4) zwei geneigte Oberflächen sind.

3. Tragelement (1, 2) gemäß einem der vorhergehenden Ansprüche, wobei die Unterseite (15) des Hauptkörpers (3) des Tragelements (1) mindestens eine ebene Oberfläche aufweist.

4. Tragelement (1, 2) gemäß Anspruch 3, wobei die Unterseite (15) des Hauptkörpers (3) des Tragelements (1) so konfiguriert ist, dass sie im Gebrauch auf einem Fundament (21) angeordnet ist.

5. Tragelement (1, 2) gemäß Anspruch 1, wobei die zwei seitlichen Bereiche (23) der Unterseite (16) des Hauptkörpers (2) geneigte Oberflächen sind.

6. Tragelement (1, 2) gemäß Anspruch 1, wobei die mindestens zwei ersten Schutzelemente (7, 8) in einer symmetrischen Position in Bezug auf die zentrale Längsachse (20) des Tragelements (1, 2) angeordnet sind.

7. Tragelement (1, 2) gemäß Anspruch 6, wobei die mindestens zwei zweiten Schutzelemente (17, 18) mindestens teilweise in einem vertikalen Vorsprung der mindestens zwei ersten Schutzelemente (7, 8) angeordnet sind.

8. Tragelement (1, 2) gemäß einem der vorhergehenden Ansprüche, wobei der Abstand zwischen dem mittleren Bereich (10) der Oberseite (6) und dem mittleren Bereich (22) der Unterseite (16), der als mittlere Dicke (t1) definiert ist, kleiner ist als der Abstand zwischen jedem der zwei seitlichen Bereiche (14) der Oberseite (6) und jedem der zwei gegenüberliegenden seitlichen Bereiche (23) der Oberseite (16), der als seitliche Dicke (t2) definiert ist.

9. Tragelement (1, 2) gemäß einem der vorhergehenden Ansprüche, wobei das erste Schutzelement (7, 8) oder die Elemente und/oder das zweite Schutzelement (17, 18) oder die Elemente ein Elastomer umfassen.

10. Tragelement (1, 2) gemäß Anspruch 9, wobei das Elastomer ein verstärktes Elastomer ist.

11. Tragelement (1, 2) gemäß Anspruch 10, wobei das verstärkte Elastomer Stahlbleche umfasst, die mit dem Elastomer verbunden sind.

12. Tragsystem, umfassend:
• ein Tragelement (1) gemäß einem der Ansprüche 1 bis 11;
• mindestens ein Tragelement (2) gemäß einem der Ansprüche 1 bis 11;
• ein erstes Segment (11) von Windturbinentürmen, wobei das eine erste Segment (11) mittels der mindestens zwei ersten Schutzelemente (7, 8) des einen Tragelements (1) gemäß einem der Ansprüche 1 bis 11 abgestützt wird, und;
• wobei die mindestens zwei zweiten Schutzelemente (17, 18) des mindestens einen Tragelements (2) gemäß einem der Ansprüche 1 bis 11 an dem einen ersten Segment (11, 12) mit der ersten Geometrie angeordnet sind;
• mindestens ein zusätzliches erstes Segment (12) von Windturbinentürmen, wobei das mindestens eine zusätzliche erste Segment (12) mittels der mindestens zwei ersten Schutzelemente (7, 8) des mindestens einen Tragelements (2) gemäß einem der Ansprüche 1 bis 11 abgestützt wird.

13. Tragsystem gemäß Anspruch 12, ferner umfassend ein Fundament (21), das so konfiguriert ist, dass es das eine Tragelement (1) gemäß einem der Ansprüche 1 bis 11, das mindestens eine Tragelement (2) gemäß einem der Ansprüche 1 bis 11 sowie das eine erste Segment (11) und das mindestens eine zusätzliche erste Segment (12) mit der ersten Geometrie abstützt.

14. Tragsystem gemäß einem der Ansprüche 12 oder 13, umfassend:
• zwei Tragelemente (1) gemäß einem der Ansprüche 1 bis 11;
• mindestens zwei Tragelemente (2) gemäß einem der Ansprüche 1 bis 11,
• wobei das eine erste Segment (11) mittels der mindestens zwei ersten Schutzelementen (7, 8) von jedem der zwei Tragelemente (1) gemäß einem der Ansprüche 1 bis 11 abgestützt wird;
• wobei die mindestens zwei zweiten Schutzelemente (17, 18) der mindestens zwei Tragelemente (2) gemäß einem der Ansprüche 1 bis 11 an dem einen ersten Segment (11) mit der ersten Geometrie angeordnet sind; und
• wobei das mindestens eine zusätzliche erste Segment (12) mittels der mindestens zwei ersten Schutzelemente (7, 8) der mindestens zwei Tragelemente (2) gemäß einem der Ansprüche 1 bis 11 abgestützt wird.

15. Tragsystem gemäß Anspruch 14, wobei die zwei Tragelemente (1) gemäß einem der Ansprüche 1 bis 11 und die mindestens zwei Tragelemente (2) gemäß einem der Ansprüche 1 bis 11 in einer symmetrischen Position in Bezug auf einen zentralen Abschnitt (29) des einen ersten Segments (11) und des mindestens einen zusätzlichen ersten Segments (12) angeordnet sind, die in einer Ebene senkrecht zu einer Längsrichtung (L) der ersten Segmente (11, 12) definiert ist.

16. Tragsystem gemäß einem der Ansprüche 12 bis 15, wobei das System so konfiguriert ist, dass es mindestens vier Segmente (11, 12), vorzugsweise mindestens fünf Segmente (11, 12), unterhalb einer von einem Kran (30) festgelegten maximalen Höhe stützt.

17. Verfahren zum Abstützen mindestens eines Segments (11, 12) von Windturbinentürmen, das mit dem Tragsystem gemäß einem der Ansprüche 12 bis 16 durchgeführt wird, wobei das Verfahren die folgenden Schritte umfasst:
• Befestigen jedes der mindestens zwei ersten Schutzelemente (7, 8) an einem seitlichen Bereich (13) der Oberseite (5) des Hauptkörpers (3) des einen oder der zwei Tragelemente (1) gemäß einem der Ansprüche 1 bis 11;
• Anordnen des einen ersten Segments (11) auf den mindestens zwei ersten Schutzelementen (7, 8) des einen oder der zwei Tragelemente (1) gemäß einem der Ansprüche 1 bis 11;
• Befestigen jedes der mindestens zwei zweiten Schutzelemente (17, 18) an einem seitlichen Bereich (23, 24) der Unterseite (16) des Hauptkörpers (4) des mindestens einen oder der mindestens zwei Tragelemente (2) gemäß einem der Ansprüche 1 bis 11;
• Anordnen des mindestens einen oder der mindestens zwei Tragelemente (2) gemäß einem der Ansprüche 1 bis 11 auf dem einen ersten Segment (1);
• Befestigen jedes der mindestens zwei ersten Schutzelemente (7, 8) an einem seitlichen Bereich (13, 14) der Oberseite (6) des Hauptkörpers (4) des mindestens einen oder der mindestens zwei Tragelemente (2) gemäß einem der Ansprüche 1 bis 11; und
• Anordnen des mindestens einen zusätzlichen ersten Segments (12) an den mindestens zwei ersten Schutzelementen (7, 8) des mindestens einen oder der mindestens zwei Tragelemente (2) gemäß einem der Ansprüche 1 bis 11.

18. Verfahren gemäß Anspruch 17, ferner umfassend die folgenden Schritte:
• Gießen eines Fundaments (21) in einem Aufschüttungsgebiet;
• Anordnen des mindestens einen oder der mindestens zwei Tragelemente (1, 2) gemäß einem der Ansprüche 1 bis 11 auf dem Fundament;
wobei der Schritt des Anordnens des einen oder der zwei ersten Segmente (11) auf den mindestens zwei ersten Schutzelementen (7, 8) des einen oder der zwei Tragelemente (1) gemäß einem der Ansprüche 1 bis 11 nach dem Schritt des Anordnens des einen oder der zwei Tragelemente (1) gemäß einem der Ansprüche 1 bis 11 auf dem Fundament (21) durchgeführt wird.

## Revendications

1. Élément de support (1, 2) pour un segment (11, 12) de tours d'éoliennes, dans lequel l'élément de support (1, 2) comprend :
• un corps principal (3, 4) qui comprend à son tour une surface supérieure (5, 6), dans lequel la surface supérieure (5, 6) du corps principal (3, 4) comprend une zone centrale (9, 10) et deux zones latérales (13, 14) ;
• au moins deux premiers éléments de protection (7, 8), chacun étant conçu pour être fixé à une zone latérale (13, 14) des deux zones latérales (13, 14) de la surface supérieure (5, 6) du corps principal (3, 4) ; et
dans lequel les au moins deux premiers éléments de protection (7, 8) sont conçus, en utilisation, pour supporter au moins un premier segment (11, 12) ayant une première géométrie ;
dans lequel :
• le corps principal (3) de l'élément de support (2) comprend en outre une surface inférieure (16), dans lequel la surface inférieure (15, 16) comprend au moins une zone centrale (22) et deux zones latérales (23), et
**caractérisé en ce que** l'élément de support (2) comprend en outre :
• au moins deux seconds éléments de protection (17, 18), chacun conçu pour être fixé à une zone latérale (23) des deux zones latérales (23) de la surface inférieure (16) du corps principal (4), et
dans lequel les au moins deux seconds éléments de protection (17, 18) sont conçus, en utilisation, pour être disposés sur l'au moins un premier segment (11, 12) ayant la première géométrie.

2. Élément de support (1, 2) selon la revendication 1, dans lequel les deux zones latérales (13, 14) de la surface supérieure (5, 6) du corps principal (3, 4) sont deux surfaces inclinées.

3. Élément de support (1, 2) selon l'une quelconque des revendications précédentes, dans lequel la surface inférieure (15) du corps principal (3) de l'élément de support (1) comprend au moins une surface plane.

4. Élément de support (1, 2) selon la revendication 3, dans lequel la surface inférieure (15) du corps principal (3) de l'élément de support (1) est conçue pour être disposée, en utilisation, sur une fondation (21).

5. Élément de support (1, 2) selon la revendication 1, dans lequel les deux zones latérales (23) de la surface inférieure (16) du corps principal (2) sont des surfaces inclinées.

6. Élément de support (1, 2) selon la revendication 1, dans lequel les au moins deux premiers éléments de protection (7, 8) sont disposés dans une position symétrique par rapport à l'axe longitudinal central (20) de l'élément de support (1, 2).

7. Élément de support (1, 2) selon la revendication 6, dans lequel les au moins deux seconds éléments de protection (17, 18) sont au moins partiellement disposés dans une projection verticale des au moins deux premiers éléments de protection (7, 8).

8. Élément de support (1, 2) selon l'une quelconque des revendications précédentes, dans lequel la distance entre la zone centrale (10) de la surface supérieure (6) et la zone centrale (22) de la surface inférieure (16) définie comme une épaisseur centrale (t1) est plus petite que la distance entre chacune des deux zones latérales (14) de la surface supérieure (6) et chacune des deux zones latérales (23) opposées de la surface inférieure (16) définie comme une épaisseur latérale (t2).

9. Élément de support (1, 2) selon l'une quelconque des revendications précédentes, dans lequel le ou les premiers éléments de protection (7, 8) et/ou le ou les seconds éléments de protection (17, 18) comprennent un élastomère.

10. Élément de support (1, 2) selon la revendication 9, dans lequel l'élastomère est un élastomère renforcé.

11. Élément de support (1, 2) selon la revendication 10, dans lequel l'élastomère renforcé comprend des feuilles d'acier liées à l'élastomère.

12. Système de support comprenant :
• un élément de support (1) de l'une quelconque des revendications 1 à 11 ;
• au moins un élément de support (2) de l'une quelconque des revendications 1 à 11 ;
• un premier segment (11) de tours d'éoliennes, dans lequel ledit premier segment (11) est supporté au moyen des au moins deux premiers éléments de protection (7, 8) de l'élément de support (1) de l'une quelconque des revendications 1 à 11, et ;
• dans lequel les au moins deux seconds éléments de protection (17, 18) de l'au moins un élément de support (2) de l'une quelconque des revendications 1 à 11 sont disposés sur ledit premier segment (11, 12) ayant la première géométrie ;
• au moins un premier segment supplémentaire (12) de tours d'éoliennes, dans lequel l'au moins un premier segment supplémentaire (12) est supporté au moyen des au moins deux premiers éléments de protection (7, 8) de l'au moins un élément de support (2) de l'une quelconque des revendications 1 à 11.

13. Système de support selon la revendication 12, comprenant en outre une fondation (21) conçue pour supporter ledit élément de support (1) de l'une des revendications 1 à 11, l'au moins un élément de support (2) de l'une quelconque des revendications 1 à 11, et ledit premier segment (11) et l'au moins un premier segment supplémentaire (12) ayant la première géométrie.

14. Système de support selon l'une quelconque des revendications 12 ou 13, comprenant :
• deux éléments de support (1) de l'une quelconque des revendications 1 à 11 ;
• au moins deux éléments de support (2) de l'une quelconque des revendications 1 à 11,
• dans lequel ledit premier segment (11) est supporté au moyen des au moins deux premiers éléments de protection (7, 8) de chacun des deux éléments de support (1) de l'une quelconque des revendications 1 à 11 ;
• dans lequel les au moins deux seconds éléments de protection (17, 18) des au moins deux éléments de support (2) de l'une quelconque des revendications 1 à 11 sont disposés sur ledit premier segment (11) ayant la première géométrie ; et
• dans lequel l'au moins un premier segment supplémentaire (12) est soutenu au moyen des au moins deux premiers éléments de protection (7, 8) des au moins deux éléments de support (2) de l'une quelconque des revendications 1 à 11.

15. Système de support selon la revendication 14, dans lequel les deux éléments de support (1) de l'une quelconque des revendications 1 à 11 et les au moins deux éléments de support (2) de l'une quelconque des revendications 1 à 11 sont disposés dans une position symétrique par rapport à une section centrale (29) dudit premier segment (11) et de l'au moins un premier segment supplémentaire (12) définie dans un plan perpendiculaire à une direction longitudinale (L) des premiers segments (11, 12).

16. Système de support selon l'une quelconque des revendications 12 à 15, dans lequel le système est conçu pour supporter au moins quatre segments (11, 12), de préférence au moins cinq segments (11, 12) en dessous d'une hauteur maximale prédéterminée définie par une grue (30).

17. Procédé de support d'au moins un segment (11, 12) de tours d'éoliennes réalisé avec le système de support de l'une quelconque des revendications 12 à 16, dans lequel le procédé comprend les étapes consistant à :
• fixer chacun des au moins deux premiers éléments de protection (7, 8) à une zone latérale (13) de la surface supérieure (5) du corps principal (3) dudit ou des deux éléments de support (1) de l'une quelconque des revendications 1 à 11 ;
• disposer ledit premier segment (11) sur les au moins deux premiers éléments de protection (7, 8) dudit ou des deux éléments de support (1) de l'une quelconque des revendications 1 à 11 ;
• fixer chacun des au moins deux seconds éléments de protection (17, 18) à une zone latérale (23, 24) de la surface inférieure (16) du corps principal (4) de l'au moins un ou des au moins deux éléments de support (2) de l'une quelconque des revendications 1 à 11 ;
• disposer l'au moins un ou les au moins deux éléments de support (2) de l'une quelconque des revendications 1 à 11 sur le premier segment (1) ;
• fixer chacun des au moins deux premiers éléments de protection (7, 8) à une zone latérale (13, 14) de la surface supérieure (6) du corps principal (4) de l'au moins un ou des au moins deux éléments de support (2) de l'une quelconque des revendications 1 à 11 ; et
• disposer l'au moins un premier segment supplémentaire (12) sur les au moins deux premiers éléments de protection (7, 8) de l'au moins un ou des au moins deux éléments de support (2) de l'une quelconque des revendications 1 à 11.

18. Procédé selon la revendication 17, comprenant en outre les étapes consistant à :
• couler une fondation (21) dans une zone de stockage ;
• disposer ledit ou les deux éléments de support (1, 2) de l'une quelconque des revendications 1 à 11 sur la fondation ;
dans lequel l'étape consistant à disposer ledit ou les deux premiers segments (11) sur les au moins deux premiers éléments de protection (7, 8) dudit ou des deux éléments de support (1) de l'une quelconque des revendications 1 à 11 est effectuée après l'étape consistant à disposer ledit ou les deux éléments de support (1) de l'une quelconque des revendications 1 à 11 sur la fondation (21).
